(19) Europäisches Patentamt
European Patent Office
Office européen des brevets

(11) **EP 4 250 388 A1**

(12) **EUROPEAN PATENT APPLICATION**
published in accordance with Art. 153(4) EPC

(43) Date of publication:
**27.09.2023 Bulletin 2023/39**

(21) Application number: **20961989.9**

(22) Date of filing: **20.11.2020**

(51) International Patent Classification (IPC):
**H01M 4/13** $^{(2010.01)}$    **H01M 10/0525** $^{(2010.01)}$

(52) Cooperative Patent Classification (CPC):
**H01M 4/13; H01M 10/0525; H01M 10/42; Y02E 60/10**

(86) International application number:
**PCT/CN2020/130421**

(87) International publication number:
**WO 2022/104698 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventor: **HAN, Dongdong**
**Ningde, Fujian 352100 (CN)**

(74) Representative: **Icosa**
**83 avenue Denfert-Rochereau**
**75014 Paris (FR)**

(54) **ELECTRODE PLATE FOR IMPROVING SAFETY OF ELECTRODE ASSEMBLY, ELECTROCHEMICAL DEVICE CONTAINING SAME, AND ELECTRONIC DEVICE**

(57) This application relates to an electrode plate for improving safety of an electrode assembly and an electrochemical apparatus and electronic apparatus containing the same. This application provides a positive electrode. The positive electrode includes a positive electrode current collector, a positive electrode active material layer, and a coating, where the positive electrode active material layer and the coating are provided on a surface of the positive electrode current collector, and adhesion between the coating and the positive electrode current collector is greater than or equal to 5 N/m. In the positive electrode of this application, the coating is provided, the coating and the positive electrode current collector are designed, and the adhesion of the coating to the positive electrode current collector is improved so that the safety performance of electrode assemblies containing such positive electrode can be effectively improved. When the electrochemical apparatus of this application is impacted or penetrated by an external force, the coating with high adhesion can improve the structural stability of the electrode assembly containing the coating and reduce the occurrence of short circuits between electrode plates, thereby improving safety performance of the electrochemical apparatus.

FIG. 1

**Description**

**TECHNICAL FIELD**

This application relates to the field of energy storage, specifically to an electrode plate for improving safety of an electrode assembly and an electrochemical apparatus and electronic apparatus containing the same, and in particular to a lithium-ion battery.

**BACKGROUND**

With the development of technology and the increasing demand for mobile apparatuses, demands for electrochemical apparatuses (for example, lithium-ion batteries) have increased significantly. In addition, lithium-ion batteries with high safety are one of the research directions.

In actual use, electrochemical apparatuses are inevitably impacted by foreign objects and even penetrated by sharp objects in extreme cases. When an electrochemical apparatus is penetrated, for one, in the case of a metal penetrating object, a penetrated part of a current collector is connected conductively to another electrode via that metal object, and for another, the penetrated part of the current collector is often accompanied by burrs and deforms and extends as the penetrating object goes downward to pierce the separator and directly connect the positive electrode and the negative electrode. These two cases are both likely to cause short circuits, and as a result, a large amount of heat is generated, leading to fire or even explosion of the lithium-ion battery. This seriously threatens the safety of consumers in use.

Given this, it is necessary to study and improve electrode plates so as to enhance use safety of electrochemical apparatuses and electronic apparatuses containing such electrode plates.

**SUMMARY**

Some embodiments of this application provide an electrode plate for improving safety of an electrode assembly and an electrochemical apparatus containing the same, to resolve at least one problem existing in the related field to at least some extent.

According to one aspect of this application, this application provides a positive electrode. The positive electrode includes a positive electrode current collector, a positive electrode active material layer, and a coating, where the positive electrode active material layer and the coating are provided on a surface of the positive electrode current collector, and adhesion between the coating and the positive electrode current collector is greater than or equal to 5 N/m.

According to another aspect of this application, this application provides an electrochemical apparatus, including the positive electrode described in the foregoing embodiments.

In the positive electrode of this application, the coating is provided, the coating and the positive electrode current collector are designed, and the adhesion of the coating to the positive electrode current collector is improved so that the safety performance of electrode assemblies containing such positive electrode can be effectively improved. When the electrochemical apparatus of this application is impacted or penetrated by an external force, the coating with high adhesion can improve the structural stability of the electrode assembly containing the coating of the electrochemical apparatus and reduce the occurrence rate of short circuits between electrode plates, thereby improving the safety performance of the electrochemical apparatus.

According to another aspect of this application, this application provides an electronic apparatus, including the foregoing electrochemical apparatus.

Additional aspects and advantages of some embodiments of this application are partially described and presented in subsequent descriptions, or explained by implementation of some embodiments of this application.

**BRIEF DESCRIPTION OF DRAWINGS**

To describe some embodiments of this application, the following briefly describes the accompanying drawings required for describing some embodiments of this application or the prior art.

FIG. 1 is a schematic diagram of a structure of a positive electrode according to some embodiments of this application.
FIG. 2 is a schematic diagram of a structure of a positive electrode according to some embodiments of this application.
FIG. 3 is a schematic diagram of a cross-sectional structure of a positive electrode according to some embodiments of this application.
FIG. 4 is a schematic top view of a structure of a positive electrode according to some embodiments of this application.
FIG. 5 is a schematic top view of a structure of a positive electrode according to some embodiments of this application.

FIG. 6 is a schematic top view of a structure of a positive electrode according to some embodiments of this application.

## DETAILED DESCRIPTION OF EMBODIMENTS

Some embodiments of this application are described in detail below. These embodiments of this application should not be construed as limitations on this application.

Unless otherwise expressly indicated, the following terms used in this specification have the meanings described below.

In the specific embodiments and claims, a list of items connected by the terms "at least one of", "at least one piece of", "at least one type of", or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single element or a plurality of elements. The item B may include a single element or a plurality of elements. The item C may include a single element or a plurality of elements.

In addition, for ease of description, "first", "second", "third", and the like may be used to distinguish between different components in one drawing or a series of drawings in this specification. Unless otherwise specified or limited, "first", "second", "third", and the like are not intended to describe corresponding components.

An electrode (positive or negative) of an electrochemical apparatus (for example, lithium-ion battery) is generally prepared by using the following method: mixing an active material, a conductive agent, a thickener, a binder, and a solvent, and then applying the resulting slurry mix onto a current collector to form an active material layer. When the electrochemical apparatus is penetrated, in the case of a metal penetrating object, a penetrated part of the current collector is connected conductively to another electrode via that metal object. In addition, the penetrated part of the current collector is often accompanied by burrs and deforms and extends downward with the movement of the penetrating object to pierce the separator and directly connect the positive electrode and the negative electrode, leading to short circuits.

In this application, the positive electrode is designed and improved to avoid contact between the current collector and the metal penetrating object and contact between the burrs of the current collector and another electrode when the electrochemical apparatus containing such a positive electrode is being penetrated or impacted by foreign objects, thereby improving the safety of the electrochemical apparatus. In this application, the positive electrode is implemented by applying a coating with high adhesion onto the surface of the current collector. The method for controlling adhesion is to control the type of binders and the composition of binder and insulation material in a coating slurry.

According to one aspect of this application, this application provides a positive electrode, including a coating and a positive electrode active material layer described below.

### I. Positive electrode

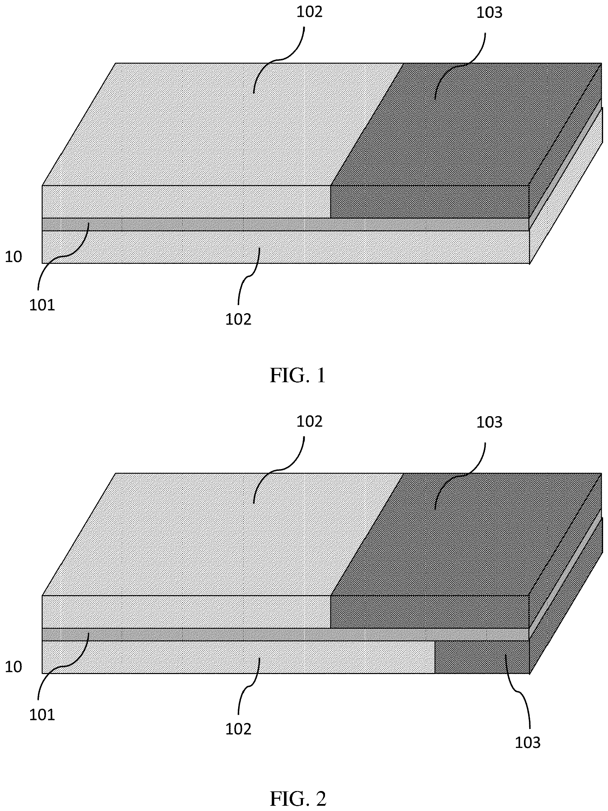

Refer to FIG. 1 to FIG. 3. A positive electrode 10 includes a positive electrode current collector 101, a positive electrode active material layer 102, and a coating 103, where the positive electrode active material layer 102 and the coating 103 are provided on a surface of the positive electrode current collector 101, the positive electrode active material layer 102 is provided on a first portion 1011 of the surface of the positive electrode current collector, and the coating is provided on a second portion 1012 of the surface of the positive electrode current collector.

In some embodiments, the second portion 1012 of the surface of the positive electrode current collector is different from the first portion 1011. In some embodiments, the second portion is a partial region uncoated with the positive electrode active material layer, which includes but is not limited to a side portion of the positive electrode current collector, an end portion of the positive electrode current collector, a coating gap of the positive electrode active material layer, or a tab.

As shown in FIG. 1 and FIG. 2, in some embodiments, the positive electrode active material layer and the coating can be provided on the surface of the positive electrode current collector in a single-sided or double-sided manner.

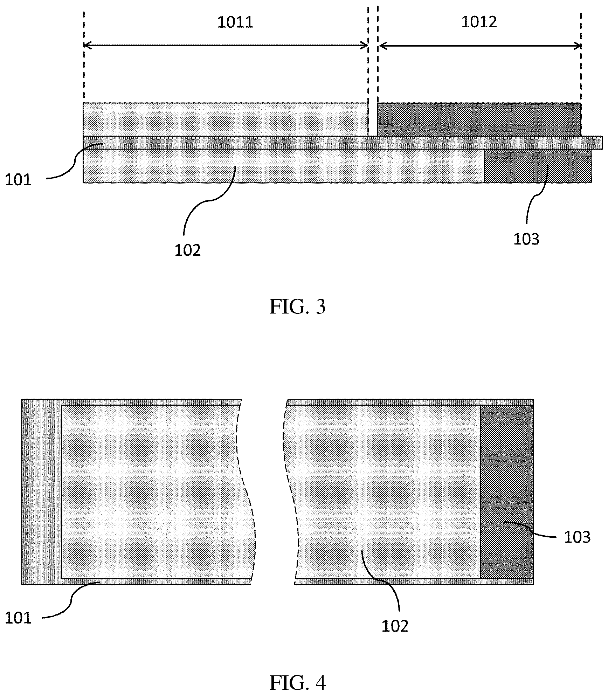

It should be understood that no gap being present between the coating and the positive electrode active material layer shown in FIG. 1 and FIG. 2 is merely an example for describing an arrangement relation between the coating and the positive electrode active material layer. As shown in FIG. 3, in some embodiments, a gap distance can be present between the coating and the positive electrode active material layer. In some embodiments, the gap distance between the coating and the positive electrode active material layer is less than or equal to 3 mm.

In some embodiments, as shown in FIG. 4, the coating is provided on an end portion of the positive electrode current collector in a length direction. In some embodiments, width of the coating in the length direction of the positive electrode current collector is less than or equal to 200 mm. In some embodiments, the width of the coating in the length direction of the positive electrode current collector is about 150 mm. It should be understood that the coating in FIG. 4 being only provided on one end portion of the positive electrode current collector is merely an example for describing an arrangement relation of the coating. In some embodiments, the coating can be provided on one or two end portions of the positive electrode current collector. In some embodiments, a surface of the positive electrode current collector facing toward the coating is at least partially provided with the positive electrode active material layer.

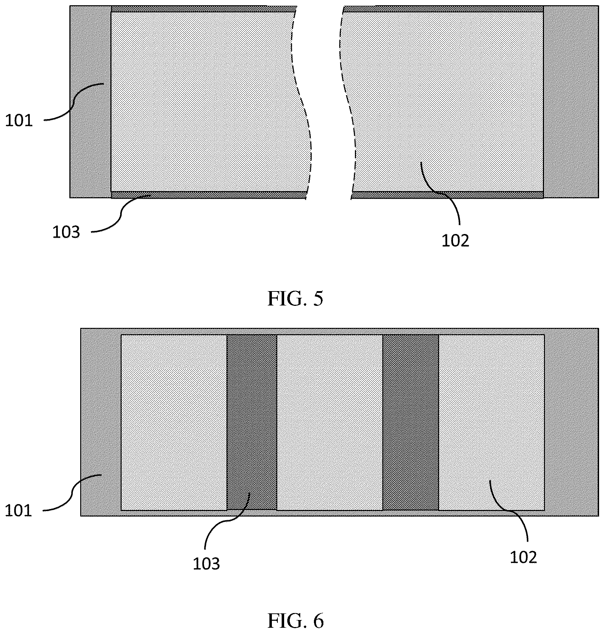

In some embodiments, as shown in FIG. 5, the coating is provided on a side portion of the positive electrode current collector in a width direction. In some embodiments, width of the coating in the width direction of the positive electrode current collector is less than or equal to 5 mm. In some embodiments, the width of the coating in the width direction of the positive electrode current collector is about 2 mm. In some embodiments, the positive electrode can be provided with the coating at an edge of the positive electrode current collector in the width direction.

In some embodiments, as shown in FIG. 6, the coating is provided in a coating gap of the positive electrode active material layer in a length direction of the positive electrode current collector. In some embodiments, coating width of the coating is less than or equal to 10 mm. In some embodiments, the coating width of the coating is about 5 mm. In this application, controlling the coating width of the coating provided in the coating gap of the positive electrode active material layer can further reduce damage to the electrode assembly possibly caused when being impacted or penetrated by external force from the side, and improve the structural stability of the electrode assembly in a winding structure or a laminated structure.

According to some embodiments of this application, the coating is provided on at least one of the end portion of the positive electrode current collector in the length direction, the edge of the positive electrode current collector in the width direction, or the gap of the positive electrode active material layer in the length direction of the positive electrode current collector.

According to some embodiments of this application, the positive electrode includes a positive electrode tab, where the coating is present on a surface of the positive electrode tab.

In some embodiments, the coating is provided in all regions uncoated with the positive electrode active material layer on the surface of the positive electrode current collector. It should be understood that the arrangement position of the coating as shown in FIG. 3 to FIG. 5 is an example embodiment for description. Without departing from the essence of this application, persons skilled in the art can adjust or combine arrangement positions of the coating in various embodiments based on actual needs without limitation.

## 1. Coating

According to some embodiments of this application, adhesion of the coating to the positive electrode current collector is at least greater than or equal to 5 N/m.

In the positive electrode provided with a coating of this application, the adhesion of the coating to the positive electrode current collector is specified, which can effectively improve the protection of the coating for the positive electrode current collector, thereby reducing short circuits that are possibly caused when the positive electrode current collector is penetrated or impacted by an external force. In some other embodiments, the adhesion of the coating to the positive electrode current collector is greater than or equal to 10 N/m. In some other embodiments, the adhesion of the coating to the positive electrode current collector is greater than or equal to 30 N/m.

According to some embodiments of this application, the coating includes a binder. In some embodiments, the binder is a colloidal high molecular polymer.

According to some embodiments of this application, the binder includes at least one of polyvinylidene fluoride PVDF, polytetrafluoroethylene PTFE, sodium carboxymethyl cellulose CMC, styrene-butadiene rubber SBR, nitrile rubber, polyurethane, fluorinated rubber, polyvinyl alcohol PVA, or sodium polyacrylate. In some embodiments, a molecular weight of the binder is greater than or equal to 10 kDa. In some other embodiments, the molecular weight of the binder is greater than or equal to 100 kDa.

According to some embodiments of this application, the coating further includes an insulation material. The insulation material can be a solid powder, sheet or block material.

According to some embodiments of this application, based on weight of the coating, mass percentage of the binder is 2% to 100%. In some embodiments, the coating includes the binder and the insulation material.

According to some embodiments of this application, the insulation material includes at least one of an inorganic insulation material or an organic insulation material.

According to some embodiments of this application, the inorganic insulation material includes at least one element of Ba, Ca, Al, Si, Ti, Mg, Fe, or B.

According to some embodiments of this application, the inorganic insulation material includes at least one of $BaSO_4$, $CaSiO_3$, $CaSiO_4$, $\gamma$-AlOOH, $Al_2O_3$, $TiO_2$, $SiO_2$, SiC, SiN, MgO, $Fe_2O_3$, or BN.

According to some embodiments of this application, the organic insulation material includes at least one of a homopolymer or copolymer of the following compositions: ethylene, vinyl chloride, propylene, styrene, butadiene, vinylidene fluoride, tetrafluoroethylene, or hexafluoropropylene. In some embodiments, a molecular weight of the organic insulation material is greater than or equal to 50 kDa.

According to some embodiments of this application, an average particle size T of the insulation material is 0.1 μm to 20 μm. In some embodiments, the average particle size T of the insulation material 0.5 μm to 5 μm.

In this specification, the term "average particle size" is an average value of particle sizes R of sample particles. For example, a method for measuring the average particle size of particles of the insulation material in this application is as follows: First, a cross section is prepared in a direction perpendicular to the positive electrode current collector, and a scanning electron microscope (hereinafter referred to as "SEM" for short) is used to take an SEM image of this cross section. Then, 10 insulation material particles are randomly selected from the SEM image of the cross section of the coating by using image analysis software, respective cross-sectional areas of the insulation material particles in the SEM image are obtained through calculation, and respective particle sizes R (diameters) of the insulation material particles are obtained by using the following formula:

$$R = 2 \times (S/\pi)^{1/2},$$

where S denotes area of the insulation material particle.

The particle sizes R of the insulation material particles are calculated for 30 SEM images, and the particle sizes R of the 300 insulation material particles are arithmetically averaged, so as to obtain an average particle size T of insulation material particles.

According to some embodiments of this application, thickness of the coating is greater than or equal to 0.5 μm.

According to some embodiments of this application, the coating and its insulation material are in a relation satisfying the following condition:

$$h \geq 1.5 \times T,$$

where h denotes thickness of the coating, and T denotes average particle size of the insulation material. In the insulation material in the coating satisfying the foregoing condition, the insulation material and the binder can be further uniformly dispersed so that the coating can be uniformly applied onto the surface of the positive electrode current collector, and the overall adhesion of the coating to the surface of the positive electrode current collector can be improved, thereby effectively improving protection for a region coated with the coating.

**2. Positive electrode active material layer**

The positive electrode active material layer contains a positive electrode active material. The positive electrode active material layer may be one or more layers, and each of the plurality of layers of the positive electrode active material may contain the same or different positive electrode active materials. The positive electrode active material is any material capable of reversibly intercalating and deintercalating metal ions such as lithium ions. In some embodiments, discharge capacity of the positive electrode active material is less than rechargeable capacity of the negative electrode active material to prevent lithium metal from unexpectedly precipitating onto the negative electrode during charging.

The type of the positive electrode active material is not particularly limited, provided that metal ions (for example, lithium ions) can be electrochemically absorbed and released. In some embodiments, the positive electrode active material is a material that contains lithium and at least one transition metal. Instances of the positive electrode active material may include but are not limited to lithium transition metal composite oxides and lithium-containing transition metal phosphate compounds.

In some embodiments, transition metals in the lithium transition metal composite oxides include V, Ti, Cr, Mn, Fe, Co, Ni, Cu, and the like. In some embodiments, the lithium transition metal composite oxides include lithium cobalt composite oxides such as $LiCoO_2$, lithium nickel composite oxides such as $LiNiO_2$, lithium manganese composite oxides such as $LiMnO_2$, $LiMn_2O_4$, and $Li_2MnO_4$, and lithium nickel manganese cobalt composite oxides such as $LiNi_{1/3}Mn_{1/3}Co_{1/3}O_2$ and $LiNi_{0.5}Mn_{0.3}Co_{0.2}O_2$, where part of transition metal atoms serving as main bodies of these lithium transition metal composite oxides are substituted with other elements such as Na, K, B, F, Al, Ti, V, Cr, Mn, Fe, Co, Li, Ni, Cu, Zn, Mg, Ga, Zr, Si, Nb, Mo, Sn, and W. Instances of the lithium transition metal composite oxides may include but are not limited to $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, and $LiMn_{1.5}Ni_{0.5}O_4$. Instances of combinations of the lithium transition metal composite oxides include but are not limited to combinations of $LiCoO_2$ and $LiMn_2O_4$, where part of Mn in $LiMn_2O_4$ may be substituted with a transition metal (for example, $LiNi_{0.33}Co_{0.33}Mn_{0.33}O_2$), and part of Co in $LiCoO_2$ may be substituted with a transition metal.

In some embodiments, transition metals in the lithium-containing transition metal phosphate compounds include V, Ti, Cr, Mn, Fe, Co, Ni, Cu, and the like. In some embodiments, the lithium-containing transition metal phosphate compounds include iron phosphates such as $LiFePO_4$, $Li_3Fe_2(PO_4)_3$, and $LiFeP_2O_7$, and cobalt phosphates such as $LiCoPO_4$, where part of transition metal atoms serving as main bodies of these lithium-containing transition metal phosphate compounds are substituted with other elements such as Al, Ti, V, Cr, Mn, Fe, Co, Li, Ni, Cu, Zn, Mg, Ga, Zr, Nb, and Si.

In some embodiments, a powder material of lithium transition metal oxide $Li_aM_bO_2$ is used, where $0.9 < a < 1.1$, $0.9 < b < 1.1$, and M is mainly selected from transition metals Mn, Co, and Ni; and the composition M is changed with the particle size.

In some embodiments, in a powder electrode active material of the lithium transition metal oxide $Li_aM_bO_2$, $M=A_ZA'_{Z'}M'_{1-Z-Z'}$, and $M'=Mn_xNi_yCo_{1-x-y}$; where $0 \le y \le 1$, $0 \le x \le 1$, $0 \le Z+Z' < 0.1$, and $Z' < 0.02$. A is selected from at least one element of Al, Mg, Ti, or Cr. In addition, A' is selected from at least one element of F, Cl, S, Zr, Ba, Y, Ca, B, Be, Sn, Sb, Na, or Zn.

In some embodiments, an average composition of transition metals is $M=Mn_xNi_yCo_{1-x-y}$, where $0.03 < x < 0.35$.

In some embodiments, an average composition of transition metals is $M=Mn_xNi_yCo_{1-x-y}$, where $0.03 < x$, and $x+y < 0.7$.

In some embodiments, in the powder electrode active material $Li_aM_bO_2$ whose composition is related to the particle size, all parts of substantially all particles have a layered crystal structure; a large particle has a composition $Li_aM_bO_2$, where $M=Mn_xNi_yCo_{1-x-y}$ and $x+y < 0.35$; and a small particle has a composition $Li_aM_bO_2$, where $M=Mn_{x'}Ni_{y'}Co_{1-x'-y'}$, a percentage of Co is at least less than 10%, $(1-x'-y') < 0.9 \times (1-x-y)$, a percentage of Mn is at least greater than 5%, and $x'-x > 0.05$. In this way, powder whose composition is related to size can be obtained. In other words, a component containing large particles (for example, mainly distributed at $\ge 20$ μm) can achieve rapid bulk phase diffusion. Another component containing small particles (for example, distributed around 5 μm) can guarantee safety. Thus, an electrode active material with high cycling stability, high safety, high volumetric energy density, and high weight energy density is provided.

In some embodiments, the positive electrode active material has a wide particle size distribution, which is specified as a particle size ratio of large particles to small particles being greater than 3, that is, $D_v90/D_v10 > 3$, where $D_v90$ denotes a particle size where the cumulative distribution by volume reaches 90% as counted from the small particle size side. $D_v10$ denotes a particle size where the cumulative distribution by volume reaches 10% as counted from the small particle size side. The particle size distribution of the powder can be determined by using an appropriate method known in the prior art. For example, the appropriate method includes laser diffraction or sieving by using sieves with different meshes.

In some embodiments, a single particle is substantially a lithium transition metal oxide and contains Co, where the amount of Co in the transition metal is continuously increased with the particle size.

In some embodiments, the single particle further contains Mn as a transition metal, where the amount of Mn is continuously decreased with the particle size.

In some embodiments, the positive electrode active material have large particles similar to the composition of $LiCoO_2$, and the large particles have a high Li diffusion constant, thus sufficient rate performance can be obtained. The large particles only occupy a small part of the total surface area of the positive electrode. Therefore, heat released by reaction with electrolyte on the surface or the outer side is limited. As a result, fewer large particles lead to poor safety. Small particles have a composition containing less Co to obtain improved safety. A lower lithium diffusion constant can be accepted in the small particles without obvious loss of rate performance. This is because of a short solid diffusion path.

In some embodiments, a preferable composition of the small particles contains a small amount of Co and a large amount of stable elements such as Mn. Slow Li bulk diffusion is acceptable, but the surface stability is high. In positive electrode active material powder of this application, a preferable composition of the large particles contains a large amount of Co and a small amount of Mn. This is because rapid lithium bulk diffusion is required and slightly lower surface stability is acceptable.

In some embodiments, in a single particle having a composition of $Li_xMO_2$, preferably, at least 80wt% of M is cobalt or nickel. In some embodiments, the inner side of the particle has a composition similar to $LiCoO_2$. The outer side of the particle has a lithium manganese nickel cobalt oxide.

The powder electrode active material with the composition related to the size can be prepared by using the following method: depositing at least one precipitate containing transition metal on seed particles, where the seed particles have transition metal compositions different from the precipitate; adding a controlled amount of lithium source; and carrying out at least one heat treatment, where substantially all the resulting particles contain an inner core obtained from a seed crystal, and the inner core is completely covered with a layer obtained from the precipitate.

**3. Positive electrode current collector**

There is no special limitation on the type of the positive electrode current collector and it can be any suitable material in the field. For example, in some embodiments, the positive electrode current collector is aluminum foil.

In some embodiments, an elongation rate x of the positive electrode current collector is in a range of 1.5% to 3.5%.

In some embodiments, strength p of the positive electrode current collector is in a range of 100 MPa to 300 MPa.

In some embodiments, thickness H of the positive electrode current collector is in a range of 5 $\mu$m to 20 $\mu$m.

According to some embodiments of this application, the coating and the positive electrode current collector are in a relation satisfying the following condition:

$$h \geq (H \times p \times x)/k,$$

where h denotes thickness of the coating, x denotes elongation rate of the positive electrode current collector, p denotes strength of the positive electrode current collector, H denotes thickness of the positive electrode current collector, and k is equal to 100 MPa. For the coating in the embodiments of this application, by limiting a relation between the thickness of the coating and the elongation rate, strength and thickness of the positive electrode current collector, metal spikes formed by deformation of the positive electrode current collector when the positive electrode current collector is penetrated can be further avoided, thereby reducing short circuits between the positive electrode current collector and other adjacent current collectors.

In some embodiments, surface roughness of the positive electrode current collector is in a range of 0.01 $\mu$m to 5 $\mu$m. For the positive electrode in the embodiments of this application, limiting the surface roughness of the positive electrode current collector can further improve the structural stability of the coating and the positive electrode active material layer that are provided on the surface of the positive electrode current collector, and electrical performance of the positive electrode.

### II. Electrolyte

The electrolyte used in the electrochemical apparatus of this application includes an electrolytic salt and a solvent for dissolving the electrolytic salt. In some embodiments, the electrolyte used in the electrochemical apparatus of this application further includes an additive.

In some embodiments, the electrolyte further contains any non-aqueous solvent that is known in the art and that can be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, instances of the cyclic carbonate may include but are not limited to one or more of the following: ethylene carbonate (EC), propylene carbonate (PC), and butylene carbonate. In some embodiments, the cyclic carbonate has 3 to 6 carbon atoms.

In some embodiments, instances of the linear carbonate may include but are not limited to one or more of the following: dimethyl carbonate, ethyl methyl carbonate, diethyl carbonate (DEC), methyl n-propyl carbonate, ethyl n-propyl carbonate, dipropyl carbonate, and the like. Instances of the linear carbonate substituted with fluorine may include but are not limited to one or more of the following: bis(fluoromethyl) carbonate, bis(difluoromethyl) carbonate, bis(trifluoromethyl) carbonate, bis(2-fluoroethyl) carbonate, bis(2,2-difluoroethyl) carbonate, bis(2,2,2-trifluoroethyl) carbonate, 2-fluoroethyl methyl carbonate, 2,2-difluoroethyl methyl carbonate, 2,2,2-trifluoroethyl methyl carbonate, and the like.

In some embodiments, instances of the cyclic carboxylate may include but are not limited to one or more of the following: $\gamma$-butyrolactone and $\gamma$-valerolactone. In some embodiments, some hydrogen atoms in the cyclic carboxylate can be substituted with fluorine.

In some embodiments, instances of the linear carboxylates may include but are not limited to one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the linear carboxylate can be substituted with fluorine. In some embodiments, instances of the fluorine-substituted linear carboxylate may include but are not limited to methyl trifluoroacetate, ethyl trifluoroacetate, propyl trifluoroacetate, butyl trifluoroacetate, 2,2,2-trifluoroethyl trifluoroacetate, and the like.

In some embodiments, instances of the cyclic ether may include but are not limited to one or more of the following: tetrahydrofuran, 2-methyltetrahydrofuran, 1,3-dioxolane, 2-methyl-1,3-dioxolane, 4-methyl-1,3-dioxolane, 1,3-dioxane, 1,4-dioxane, and dimethoxypropane.

In some embodiments, instances of the linear ether may include but are not limited to one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxy ethane, and 1,2-ethoxymethoxyethane.

In some embodiments, instances of the phosphorus-containing organic solvent may include but are not limited to one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, tris(2,2,3,3,3-pentafluoropropyl) phosphate, and the like.

In some embodiments, instances of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the sulfur-containing organic solvent can be substituted with fluorine.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, linear carbonate, cyclic carboxylate, linear carboxylate, and combinations thereof. In some embodiments, the solvent used in the electrolyte in this application includes at least one of ethylene carbonate, propylene carbonate, diethyl carbonate, ethyl propionate, propyl propionate, propyl acetate, or ethyl acetate. In some embodiments, the solvent used in the electrolyte in this application includes ethylene carbonate, propylene carbonate, diethyl carbonate, ethyl propionate, propyl propionate, γ-butyrolactone, and combinations thereof.

With cyclic carboxylate and/or linear carboxylate added into the electrolyte, the cyclic carboxylate and/or linear carboxylate can form a passivation film on a surface of the electrode to improve the capacity retention rate of the electrochemical apparatus after intermittent charge cycles. In some embodiments, linear carboxylates, cyclic carboxylates, and a combination thereof account for 1% to 60% of the electrolyte. In some embodiments, the electrolyte contains ethyl propionate, propyl propionate, γ-butyrolactone, and a combination thereof, and based on the total weight of the electrolyte, a percentage of the combination is 1% to 60%, 10% to 60%, 10% % to 50%, or 20% to 50%. In some embodiments, based on the total weight of the electrolyte, a percentage of propyl propionate in the electrolyte is 1% to 60%, 10% to 60%, 20% to 50%, 20% to 40%, or 30%.

In some embodiments, instances of the additive may include but are not limited to one or more of the following: fluorocarbonate, carbon-carbon double bond-containing ethylene carbonate, sulfur-oxygen double bond-containing compound, and anhydride.

In some embodiments, based on the total weight of the electrolyte, a percentage of the additive is 0.01% to 15%, 0.1% to 10%, or 1% to 5%.

According to an embodiment of this application, based on the total weight of the electrolyte, a percentage of propionate is 1.5 to 30 times, 1.5 to 20 times, 2 to 20 times, or 5 to 20 times the percentage of the additive.

In some embodiments, the additive contains one or more fluorocarbonates. During charging/discharging of the lithium-ion battery, the fluorocarbonate can act with the propionate to form a stable protective film on the surface of the negative electrode, thereby suppressing decomposition reaction of the electrolyte.

In some embodiments, the fluorocarbonate has a formula $C=O(OR_1)(OR_2)$, where $R_1$ and $R_2$ each are selected from an alkyl group or haloalkyl group having 1 to 6 carbon atoms. At least one of $R_1$ or $R_2$ is selected from a fluoroalkyl group having 1 to 6 carbon atoms. $R_1$ and $R_2$, optionally together with the atoms to which they are attached, form a 5- to 7-membered ring.

In some embodiments, instances of the fluorocarbonate may include but are not limited to one or more of the following: fluoroethylene carbonate, cis-4,4-difluoroethylene carbonate, trans-4,4-difluoroethylene carbonate, 4,5-difluoroethylene carbonate, 4-fluoro-4-methyl ethylene carbonate, 4-fluoro-5-methyl ethylene carbonate, trifluoromethyl methyl carbonate, trifluoroethyl methyl carbonate, trifluoroethyl ethyl carbonate, and the like.

In some embodiments, the additive includes one or more carbon-carbon double bond-containing ethylene carbonates. Instances of the carbon-carbon double bond-containing ethylene carbonate may include but are not limited to one or more of the following: vinylidene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate; vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, 1,1-diethyl-2-methylene ethylene carbonate, and the like. In some embodiments, the carbon-carbon double bond-containing ethylene carbonate includes vinylidene carbonate, and can easily achieve better effects.

In some embodiments, the additive includes one or more sulfur-oxygen double bond-containing compounds. Instances of the sulfur-oxygen double bond-containing compound may include but are not limited to one or more of the following: cyclic sulfate, linear sulfate, linear sulfonate, cyclic sulfonate, linear sulfite, cyclic sulfite, and the like.

Instances of the cyclic sulfate may include but are not limited to one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, 1,5-pentanediol sulfate, and the like.

Instances of the linear sulfate may include but are not limited to one or more of the following: dimethyl sulfate, ethyl methyl sulfate, diethyl sulfate, and the like.

Instances of the linear sulfonate may include but are not limited to one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, ethyl 2-(methanesulfonyloxy) propionate, and the like.

Instances of the cyclic sulfonate may include but are not limited to one or more of the following: 1,3-propanesulfonate, 1-fluoro-1,3-propanesulfonate, 2-fluoro-1,3-propanesulfonate, 3-fluoro-1,3-propanesulfonate, 1-methyl-1,3-propanesulfonate, 2-methyl-1,3-propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propylene-1,3-sulfonate, 3-fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene disulfonate, ethylene methane disulfonate, and the like.

Instances of the linear sulfite may include but are not limited to one or more of the following: dimethyl sulfite, ethyl methyl sulfite, diethyl sulfite, and the like.

Instances of the cyclic sulfite may include but are not limited to one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, 1,5-pentanediol sulfite, and the like.

In some embodiments, the additive includes one or more acid anhydrides. Instances of the acid anhydride may include but are not limited to one or more of cyclic phosphoric anhydride, carboxylic anhydride, disulfonic anhydride, and carboxylic acid sulfonic anhydride. Instances of the cyclic phosphoric anhydride may include but are not limited to one or more of trimethylphosphoric acid cyclic anhydride, triethylphosphoric acid cyclic anhydride, and tripropylphosphoric acid cyclic anhydride. Instances of the carboxylic anhydride may include but are not limited to one or more of succinic anhydride, glutaric anhydride, and maleic anhydride. Instances of the disulfonic acid anhydride may include but are not limited to one or more of ethane disulfonic acid anhydride and propane disulfonic acid anhydride. Instances of the carboxylic acid sulfonic anhydride may include but are not limited to one or more of sulfobenzoic anhydride, sulfopropionic anhydride, and sulfobutyric anhydride.

In some embodiments, the additive is a combination of fluorocarbonate and carbon-carbon double bond-containing ethylene carbonate. In some embodiments, the additive is a combination of fluorocarbonate and the sulfur-oxygen double bond-containing compound. In some embodiments, the additive is a combination of fluorocarbonate and a compound having 2 to 4 cyano groups. In some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and phosphoric anhydride. In some embodiments, the additive is a combination of fluorocarbonate and sulfonic anhydride. In some embodiments, the additive is a combination of fluorocarbonate and carboxylic acid sulfonic anhydride.

The electrolytic salt is not particularly limited. Any material commonly known as an electrolytic salt can be used. For lithium secondary batteries, lithium salts are typically used. Instances of the electrolytic salt may include but are not limited to inorganic lithium salts such as $LiPF_6$, $LiBF_4$, $LiClO_4$, $LiAlF_4$, $LiSbF_6$, $LiTaF_6$, and $LiWF_7$; lithium tungstates such as $LiWOFs$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato) phosphate salts such as lithium tris(malonato) phosphate, lithium difluorobis(malonato) phosphate, and lithium tetrafluoro(malonato) phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $LiTaF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical apparatus such as output power, high-rate charge/discharge, high-temperature storage, and cycling characteristics.

The concentration of the electrolytic salt is not particularly limited, provided that the effects of this application are not impaired. In some embodiments, the total molar concentration of lithium in the electrolyte is greater than or equal to 0.3 mol/L, greater than 0.4 mol/L, or greater than 0.5 mol/L. In some embodiments, the total molar concentration of lithium in the electrolyte is less than 3 mol/L, less than 2.5 mol/L, or less than or equal to 2.0 mol/L. In some embodiments, the total molar concentration of lithium in the electrolyte falls within a range defined by any two of the foregoing values. When the concentration of the electrolytic salt falls within the foregoing range, the amount of lithium as charged particles would not be excessively small, and the viscosity can be controlled within an appropriate range to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on a total weight of the electrolytic salt, a percentage of the salt selected from the group consisting of monofluorophosphate, borate, oxalate, and fluorosulfonate is greater than 0.01% or greater than 0.1%. In some embodiments, based on the total weight of the electrolytic salt, the percentage of the salt selected from the group consisting of monofluorophosphate, borate, oxalate, and fluorosulfonate is less than 20% or less than 10%. In some embodiments, the percentage of the salt selected from the group consisting of monofluorophosphate, borate, oxalate, and fluorosulfonate falls within a range defined by any two of the foregoing values.

In some embodiments, the electrolytic salt includes more than one material selected from the group consisting of monofluorophosphate, borate, oxalate, and fluorosulfonate, and more than one other salt different from the more than one material. Instances of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. In some embodiments, the other salt is $LiPF_6$.

In some embodiments, based on the total weight of the electrolytic salt, a percentage of the other salt is greater than 0.01% or greater than 0.1%. In some embodiments, based on the total weight of the electrolytic salt, the percentage of the other salt is less than 20%, less than 15%, or less than 10%. In some embodiments, the percentage of the other salt falls within a range defined by any two of the foregoing values. The other salt having the foregoing percentage helps balance the conductivity and viscosity of the electrolyte.

In the electrolyte, in addition to the foregoing solvent, additive, and electrolytic salt, additional additives such as a negative electrode film forming agent, a positive electrode protection agent, and an overcharge prevention agent may be included as necessary. For the additive, an additive typically used in non-aqueous electrolyte secondary batteries can be used, and instances thereof may include but are not limited to vinylidene carbonate, succinic anhydride, biphenyls, cyclohexylbenzene, 2,4-difluoroanisole, propane sulfonate, propylene sulfonate, and the like. These additives can be used alone or in any combination. In addition, the percentage of these additives in the electrolyte is not particularly limited and can be set as appropriate to the types of the additives and the like. In some embodiments, based on the total weight of the electrolyte, the percentage of the additive is less than 5%, in a range of 0.01% to 5%, or in a range of 0.2% to 5%.

### III. Negative electrode

The negative electrode includes a negative electrode current collector and a negative electrode mixture layer provided on one or both surfaces of the negative electrode current collector. The negative electrode active material layer includes a negative electrode active material layer, and the negative electrode active material layer contains a negative electrode active material. The negative electrode active material layer may be one or more layers, and each of the plurality of layers of the negative electrode active material may contain the same or different negative electrode active materials. The negative electrode active material is any material capable of reversibly intercalating and deintercalating metal ions such as lithium ions. In some embodiments, rechargeable capacity of the negative electrode active material is greater than discharge capacity of the positive electrode active material to prevent lithium metal from unexpectedly precipitating onto the negative electrode during charging. In some embodiments, a coating like that of the positive electrode can be provided in a region uncoated with the negative electrode mixture layer on the surface of the negative electrode current collector as required.

As a current collector for holding the negative electrode active material, the negative electrode current collector can use any known current collector. Instances of the negative electrode current collector include but are not limited to metal materials such as aluminum, copper, nickel, stainless steel, and nickel plated steel. In some embodiments, the negative electrode current collector is copper.

In a case that the negative electrode current collector is a metal material, the negative electrode current collector form may include, but is not limited to, a metal foil, a metal cylinder, a metal coil, a metal plate, a metal foil, a sheet metal mesh, a punched metal, and a foamed metal. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, thickness of the negative electrode current collector is greater than 1 $\mu$m or greater than 5 $\mu$m. In some embodiments, the thickness of the negative electrode current collector is less than 100 $\mu$m or less than 50 $\mu$m. In some embodiments, the thickness of the negative electrode current collector falls within a range defined by any two of the foregoing values.

The negative electrode active material is not particularly limited, provided that it can reversibly absorb and release lithium ions. Instances of the negative electrode active material may include but are not limited to carbon materials such as natural graphite and artificial graphite; metals such as silicon (Si) and tin (Sn); and oxides of metal elements such as Si and Sn. The negative electrode active material can be used alone or in combination.

The negative electrode mixture layer may further include a negative electrode binder. The negative electrode binder can improve binding between particles of the negative electrode active material and binding between the negative electrode active material and the current collector. The type of the negative electrode binder is not particularly limited, provided that its material is stable to the electrolyte or a solvent used in manufacturing of the electrode. In some embodiments, the negative electrode binder includes a resin binder. Instances of the resin binder include but are not limited to fluororesins, polyacrylonitrile (PAN), polyimide resins, acrylic resins, and polyolefin resins. When an aqueous solvent is used for preparing a negative electrode mixture slurry, the negative electrode binder includes but is not limited to carboxymethyl cellulose (CMC) or its salt, styrene-butadiene rubber (SBR), polyacrylic acid (PAA) or its salt, and polyvinyl alcohol.

The negative electrode can be prepared by using the following method: applying a negative electrode mixture slurry containing the negative electrode active material, the resin binder, and the like onto the negative electrode current collector, and after drying, and performing rolling to form a negative electrode mixture layer on both sides of the negative electrode current collector, thereby obtaining the negative electrode.

## IV. Separator

In order to prevent short circuit, a separator is typically provided between the positive electrode and the negative electrode. In this case, the electrolyte of this application typically permeates the separator.

The material and shape of the separator are not particularly limited, provided that the separator does not significantly impair the effects of this application. The separator may be a resin, glass fiber, inorganic material, or the like that is formed of a material stable to the electrolyte of this application. In some embodiments, the separator includes a porous sheet or nonwoven fabric-like material having an excellent fluid retention property, or the like. Instances of the material of the resin or glass fiber separator may include but are not limited to polyolefin, aromatic polyamide, polytetrafluoroethylene, polyethersulfone, and glass filter. In some embodiments, the material of the separator is glass filter. In some embodiments, the polyolefin is polyethylene or polypropylene. In some embodiments, the polyolefin is polypropylene. The material of the separator can be used alone or in any combination.

The separator may alternatively be a material formed by laminating the foregoing materials, and instances thereof include but are not limited to a three-layer separator formed by laminating polypropylene, polyethylene, and polypropylene in order.

Instances of the material of the inorganic material may include but are not limited to oxides such as aluminum oxide and silicon dioxide, nitrides such as aluminum nitride and silicon nitride, and sulfates (for example, barium sulfate and calcium sulfate). The form of the inorganic material may include but is not limited to a granular or fibrous form.

The form of the separator may be a thin-film form, and instances thereof include but are not limited to a nonwoven fabric, a woven fabric, and a microporous film. In the thin-film form, the separator has a pore diameter of 0.01 $\mu$m to 1 $\mu$m and a thickness of 5 $\mu$m to 50 $\mu$m. In addition to the separate thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 $\mu$m.

The thickness of the separator is random. In some embodiments, the thickness of the separator is greater than 1 $\mu$m, greater than 5 $\mu$m, or greater than 8 $\mu$m. In some embodiments, the thickness of the separator is less than 50 $\mu$m, less than 40 $\mu$m, or less than 30 $\mu$m. In some embodiments, the thickness of the separator falls within a range defined by any two of the foregoing values. When the thickness of the separator falls within the foregoing range, its insulation performance and mechanical strength can be guaranteed, helping guarantee the rate performance and energy density of the electrochemical apparatus.

When a porous material such as a porous sheet or a nonwoven fabric is used as the separator, the porosity of the separator is random. In some embodiments, the porosity of the separator is greater than 20%, greater than 35%, or greater than 45%. In some embodiments, the porosity of the separator is less than 90%, less than 85%, or less than 75%. In some embodiments, the porosity of the separator falls within a range defined by any two of the foregoing values. When the porosity of the separator falls within the foregoing range, its insulation performance the mechanical strength can be ensured and film resistance can be suppressed so that the electrochemical apparatus has good rate performance.

The average pore diameter of the separator is also random. In some embodiments, the average pore diameter of the separator is less than 0.5 $\mu$m or less than 0.2 $\mu$m. In some embodiments, the average pore diameter of the separator is greater than 0.05 $\mu$m. In some embodiments, the average pore diameter of the separator falls within a range defined by any two of the foregoing values. If the average pore diameter of the separator exceeds the foregoing range, a short circuit is likely to occur. When the average pore diameter of the separator falls within the foregoing range, film resistance can be suppressed while the short circuit is prevented, so that the electrochemical apparatus has good rate performance.

## V. Electrochemical apparatus

The electrochemical apparatus includes an electrode assembly, a collector structure, a housing, and a protective element.

### Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly falls within a range defined by any two of the foregoing values. When the occupancy of the electrode assembly falls within the foregoing range, the capacity of the electrochemical apparatus can be ensured, degradation of repeated charge/discharge performance and high temperature storage property caused by an increasing internal pressure can be suppressed, and thus operation of a gas release valve can be prevented.

According to some embodiments of this application, an outer surface of the electrode assembly can be further provided with the coating in the positive electrode of this application. In some embodiments, the coating of this application can be provided in a partial or entire region of the outer surface of the electrode assembly. The coating being provided on the outer surface of the electrode assembly can further improve safety of the electrode assembly when being subjected to external impact or penetrated by foreign objects.

### Collector structure

The collector structure is not particularly limited. In some embodiments, the collector structure is a structure that helps reduce the resistance of wiring portions and bonding portions. When the electrode assembly is the foregoing laminated structure, a structure in which metal core portions of electrode layers are bundled and welded to terminals can be used. An increase in an electrode area causes a higher internal resistance; therefore, it is also acceptable that more than two terminals are provided in the electrode to reduce the resistance. When the electrode assembly is the foregoing winding structure, more than two lead structures are provided at each of the positive electrode and the negative electrode, and are bundled at the terminals, so as to reduce the internal resistance.

### Housing

The material of the housing is not particularly limited, provided that the material is a material stable to the electrolyte in use. The housing may use but is not limited to a nickel-plated steel plate, stainless steel, metals such as aluminum, aluminum alloy, or magnesium alloy, or laminated films of resin and aluminum foil. In some embodiments, the housing is made of metal including aluminum or an aluminum alloy or of a laminated film.

The metal housing includes but is not limited to a sealed packaging structure formed by depositing metal through laser welding, resistance welding, or ultrasonic welding; or a riveting structure formed by using the foregoing metal or the like with a resin pad disposed therebetween. The housing using the laminated film includes but is not limited to a sealed packaging structure or the like formed by thermally bonding resin layers. To improve the sealing property, a resin different from the resin used in the laminated film can be sandwiched between the resin layers. When the sealed structure is formed by thermally bonding the resin layers through current collecting terminals, a resin having a polar group or a modified resin into which a polar group is introduced can be used as the sandwiched resin in consideration of the bonding of metal and resin. In addition, the housing may be in any shape. For example, it may be of any one of a cylindrical shape, a square shape, a laminated form, a button form, a large form, or the like.

According to some embodiments of this application, a binding layer is further provided on the surface of the foregoing coating that is provided on the outer surface of the electrode assembly. When the electrode assembly is disposed in the housing to form an electrochemical apparatus, the binding layer can bind a partial region of the housing and improve the structural stability of the electrochemical apparatus. In some embodiments, adhesion between the coating and the positive electrode current collector is greater than or equal to adhesion between the coating and the binding layer. Designing a difference between the adhesion of the coating to the positive electrode current collector and the adhesion of the coating to the binding layer can ensure that the coating can extend together with the positive electrode current collector when the electrochemical apparatus is penetrated by a metal penetrating object, thereby separating the positive electrode current collector from the metal penetrating object, and improving the safety performance of the electrochemical apparatus when being penetrated or impacted by foreign objects.

Protective element

The protective element may use a positive temperature coefficient (PTC), a temperature fuse, or a thermistor whose resistance increases during abnormal heat release or excessive current flows, a valve (current cutoff valve) for cutting off a current flowing in a circuit by sharply increasing an internal pressure or an internal temperature of a battery during abnormal heat release, or the like. The protective element can be selected from elements that do not operate in conventional high-current use scenarios or designed in a form that abnormal heat release or thermal runaway does not occur even without a protective element.

**VI. Application**

The electrochemical apparatus of this application includes any apparatus in which electrochemical reactions take place. Specific instances of the apparatus include all kinds of primary batteries, secondary batteries, fuel batteries, solar batteries, or capacitors. Especially, the electrochemical apparatus is a lithium secondary battery, including a lithium metal secondary battery, a lithium-ion secondary battery, a lithium polymer secondary battery, or a lithium-ion polymer secondary battery.

This application also provides an electronic apparatus, including the electrochemical apparatus according to this application.

The electrochemical apparatus of this application is not particularly limited to any purpose and may be used for any known electronic apparatus in the prior art. In one embodiment, the electrochemical apparatus of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

The following uses a lithium-ion battery as an example and describes the preparation and safety performance of a lithium-ion battery with reference to specific examples. Persons skilled in the art understand that the preparation method described in this application is only an example and that all other suitable preparation methods fall within the scope of this application.

**Examples**

The following describes performance evaluation performed based on examples and comparative examples of the lithium-ion battery in this application.

**I. Preparation of lithium-ion battery**

1. Preparation of positive electrode

Aluminum foil with a specified thickness was used as a positive electrode current collector, and an insulation material and a binder were mixed at a specified weight ratio, with deionized water added. The resulting mixture was stirred into a uniform system under the action of a vacuum mixer to obtain a coating slurry with a solid content of 40wt%.

A layer of coating slurry was applied to a partial region of the surface of the positive electrode current collector based on a size requirement of an electrode plate, and drying was performed at 85°C to obtain a positive electrode current collector coated with a coating.

A positive electrode active material lithium cobalt oxide ($LiCoO_2$), a conductive agent SP, and a binder polyvinylidene fluoride were mixed at a weight ratio of 97:1.4:1.6. N-methylpyrrolidone (NMP) was added. Then the resulting mixture was stirred into a uniform slurry under the action of a vacuum mixer to obtain a conventional positive electrode slurry with a solid content of 72wt%. A layer of positive electrode slurry was applied to a region uncoated with the coating on the surface of the positive electrode current collector based on a size requirement of the electrode plate. A resulting sheet was dried at 85°C, followed by cold pressing, cutting, and slitting. Then drying was performed in vacuum at 85°C for 4 h to obtain a positive electrode.

The coating was arranged according to conditions in the following examples and comparative examples to have corresponding parameters.

2. Preparation of negative electrode

Artificial graphite, styrene-butadiene rubber, and sodium carboxymethyl cellulose were mixed at a mass ratio of 96%:2%:2% in deionized water. The resulting mixture was stirred uniform to obtain a negative electrode slurry. The negative electrode slurry was applied onto a copper foil of 12 $\mu$m. After processes of drying, cold pressing, cutting, and tab welding, a negative electrode was obtained.

3. Preparation of electrolyte

Under a dry argon environment, EC, PC, PP, and DEC (at a weight ratio of 1:1:1:1) were mixed, and $LiPF_6$ was added. The resulting mixture was mixed uniform to obtain a base electrolyte, where a concentration of $LiPF_6$ was 1.15 mol/L.

4. Preparation of separator

A polyethylene (PE) porous polymer film was used as a separator.

5. Preparation of lithium-ion battery

The resulting positive electrode, separator, and negative electrode were wound in order and placed in an outer packing housing (outer packing foil), leaving an injection hole. The electrolyte was injected from the injection hole, and sealing was performed, followed by processes such as formation and grading to obtain a lithium-ion battery.

**II.** Test **method**

1. Coating adhesion test method

(1) Sampling: An electrode assembly subjected to formation was disassembled so to take out a positive electrode, and electrolyte was wiped off the surface of the electrode plate by using dust-free paper.
(2) Sample preparation: The electrode plate for test was taken, and cut into a sample with a width of about 20 mm and a length y of about 190 mm by using a blade, where the size could be selected based on an actual size of the electrode plate taken out.
(3) A double-sided adhesive tape (NITTO 5000 NS) was applied onto a steel plate with a width of 30 mm and a length of 200-300 mm, where the double-sided adhesive tape had a width of 20 mm and a length y.
(4) The electrode plate sample cut in step (2) was pasted to the double-sided adhesive, with a test surface facing downward.
(5) A paper tape was fastened by using a masking tape, where the paper tape was the same wide as the electrode plate but 80 mm to 200 mm longer than the sample.
(6) The paper tape was folded upward and fastened by using an upper clamp, and adhesion of the sample was tested by using a Gotech AI-3000 tensile machine, with a tensile speed of 50 mm/min, and a tensile displacement was determined based on the length of the sample.
(7) A tensile strength value f when a curve flattened was used for calculating the adhesion, where F=f*g (9.8 N/kg)/x (width of the electrode plate), and the adhesion was measured in N/m.

2. Test method of nail penetration test

10 electrochemical apparatuses (lithium-ion batteries) under test were taken, charged to a voltage of 4.4 V at a constant current of 0.5C at room temperature, and then charged to a current of 0.05C at a constant voltage of 4.4 V, so that the lithium-ion batteries were in a fully charged state of 4.4 V. Then the lithium-ion batteries were subjected to the nail penetration test under room temperature. A nail with a diameter of 2.5 mm (steel nail, made of carbon steel, with a taper of 16.5 mm and a total length of 100 mm) was driven through the lithium-ion battery at a speed of 30 mm/s, with the taper of the steel nail penetrating through the lithium-ion battery. The nail was held for 300s after penetrating. Observation was made to see whether or not the lithium-ion battery would produce smoke, catch fire, or explode. If the lithium-ion battery did not produce smoke, catch fire, or explode, the lithium-ion battery was considered to have passed the nail penetration test. The nail penetration pass rate of 10 electrochemical apparatuses under test was calculated.

**III. Test results**

Table 1 shows specific compositions of Examples 1 to 18 and Comparative Examples 1 to 3 and corresponding coating adhesion and nail penetration pass rates. The position of the coating is the end portion of the electrode plate, and the distance between the coating and the edge of the end portion is 150 mm.

**Table 1**

| | Is coating present? | Binder | | Insulation material | | Coating adhesion (N/m) | Nail penetration pass rate |
|---|---|---|---|---|---|---|---|
| | | Type | Percentage | Type | Percentage | | |
| Comparative Example 1 | / | / | / | / | / | / | 0/10 |
| Comparative Example 2 | Y | Sodium polyacrylate | 1% | γ-AlOOH | 99% | 1 | 0/10 |
| Comparative Example 3 | Y | Sodium polyacrylate | 1.5% | γ-AlOOH | 98.5% | 3 | 3/10 |
| Example 1 | Y | Sodium polyacrylate | 2% | γ-AlOOH | 98% | 5 | 5/10 |
| Example 2 | Y | Sodium polyacrylate | 3% | γ-AlOOH | 97% | 10 | 10/10 |

| | Is coating present? | Binder | | Insulation material | | Coating adhesion (N/m) | Nail penetration pass rate |
|---|---|---|---|---|---|---|---|
| | | Type | Percentage | Type | Percentage | | |
| Example 3 | Y | Sodium polyacrylate | 5% | γ-AlOOH | 95% | 30 | 10/10 |
| Example 4 | Y | Sodium polyacrylate | 10% | γ-AlOOH | 90% | 120 | 10/10 |
| Example 5 | Y | Sodium polyacrylate | 15% | γ-AlOOH | 85% | 180 | 10/10 |
| Example 6 | Y | Sodium polyacrylate | 30% | γ-AlOOH | 70% | 230 | 10/10 |
| Example 7 | Y | Sodium polyacrylate | 50% | γ-AlOOH | 50% | 230 | 10/10 |
| Example 8 | Y | Sodium polyacrylate | 80% | γ-AlOOH | 20% | 230 | 10/10 |
| Example 9 | Y | Sodium polyacrylate | 100% | γ-AlOOH | 0% | 230 | 10/10 |
| Example 10 | Y | Nitrile rubber | 30% | γ-AlOOH | 70% | 90 | 10/10 |
| Example 11 | Y | Polyurethane | 30% | γ-AlOOH | 70% | 120 | 10/10 |
| Example 12 | Y | Sodium polyacrylate | 30% | BaSO4 | 70% | 200 | 10/10 |
| Example 13 | Y | Sodium polyacrylate | 30% | CaSiO3 | 70% | 190 | 10/10 |
| Example 14 | Y | Sodium polyacrylate | 30% | Al2O3 | 70% | 220 | 10/10 |
| Example 15 | Y | Sodium polyacrylate | 30% | CaSiO4 | 70% | 190 | 10/10 |
| Example 16 | Y | Sodium polyacrylate | 30% | PE | 70% | 220 | 10/10 |
| Example 17 | Y | Sodium polyacrylate | 30% | PP | 70% | 210 | 10/10 |
| Example 18 | Y | Sodium polyacrylate | 30% | PS | 70% | 230 | 10/10 |

The results show that it can be learned from a comparison between the examples and Comparative Example 1 that the nail penetration pass rate of Comparative Example 1 without a coating is 0/10, so Comparative Example 1 does not have safety for nail penetration test; and although the coating is applied in Comparative Example 2 and Comparative Example 3, the adhesion thereof cannot satisfy the requirements of the examples of this application, and the nail penetration pass rates of the electrochemical apparatuses thereof are only 0/10 and 3/10 respectively and less than 50%, and thus safety thereof also cannot satisfy the requirements. When the coating in this application is used, Example 1 in which coating adhesion reaches 5 N/m has a nail penetration pass rate reaching 5/10 and satisfies the safety requirement of a pass rate of 50%. The coating adhesion is further improved, so the nail penetration pass rate is further significantly improved. After the coating adhesion reaches 10 N/m, a nail penetration pass rate of 100% can be achieved. This is because when the current collector at the penetrated part extends together with the metal penetrating object (steel nail) in a penetration direction, the coating with high adhesion can closely follow the extension of the broken current collector and can be blocked between the current collector and the metal penetrating object, avoiding short circuits caused by conductive connection between the current collector and the metal penetrating object due to exposure of the current collector, shielding burrs generated in penetration, and significantly reducing the risk of short circuits.

Table 2 shows the requirement relations between insulation materials with different average particle sizes and the coating thickness h.

**Table 2**

| | Is coating present? | Binder | | Insulation material | | Average particle size T of insulation material (μm) | Coating thickness h (μm) | Thickness h/Average particle size T | Nail penetration pass rate |
| | | Type | Percentage | Type | Percentage | | | | |
|---|---|---|---|---|---|---|---|---|---|
| Comparative Example 4 | Y | Sodium polyacrylate | 15% | γ-AlOOH | 85% | 0.5 | 0.5 | 1 | 2/10 |
| Comparative Example 5 | Y | | | | | 1.2 | 1.2 | 1 | 2/10 |
| Comparative Example 6 | Y | | | | | 2 | 2 | 1 | 3/10 |
| Example 19 | Y | | | | | 0.5 | 0.75 | 1.5 | 10/10 |
| Example 20 | Y | | | | | 0.5 | 1 | 2 | 10/10 |
| Example 21 | Y | | | | | 0.5 | 2 | 4 | 10/10 |
| Example 22 | Y | | | | | 1.2 | 2 | 1.7 | 10/10 |
| Example 23 | Y | | | | | 2 | 3 | 1.5 | 10/10 |
| Example 24 | Y | | | | | 3 | 4.5 | 1.5 | 10/10 |
| Example 25 | Y | | | | | 10 | 15 | 1.5 | 10/10 |
| Example 26 | Y | | | | | 20 | 30 | 1.5 | 10/10 |

The results show that compared with Comparative Examples 4 to 6, Examples 19 to 26 in which the coating thickness h and the insulation material average particle size T satisfy h≥1.5×T have significantly increased nail penetration pass rates. This is because when the average particle size of the insulation material is smaller than the coating thickness, the dispersibility of the insulation material in the coating can be improved, making the insulation material uniformly dispersed, thereby improving the separation effect of the coating. In addition, when the average particle size of the insulation material is closer to the coating thickness, a small amount of binder is present around the particle region of the insulation material, reducing the adhesion around the particle region of the insulation material. As a result, the insulation material cannot be well elongated with the penetrated current collector, and therefore has less effect in shielding burrs. In addition, when the coating thickness is greater than or equal to 1.5 times of the average particle size of the insulation material, the coverage of the coating slurry on the surface of the current collector can be improved, thereby improving the coating coverage.

Table 3 shows the influence of the relation between the coating thickness h ($\mu$m), elongation rate x, strength p (MPa), and thickness H ($\mu$m) of the current collector on the nail penetration pass rate.

**Table 3**

| | Is coating present? | Binder | | Insulation material | | Thickness of current collector (μm) | Elongation rate of current collector (-) | Strength of current collector (MPa) | $(H \times p \times x^2)/k$ (μm) | Thickness of insulation coating (μm) | Nail penetration pass rate |
| | | Type | Percentage | Type | Percentage | | | | | | |
|---|---|---|---|---|---|---|---|---|---|---|---|
| Comparative Example 7 | Y | Sodium polyacrylate | 15% | γ-AlOOH | 85% | 15 | 3.5% | 300 | 1.6 | 1 | 3/10 |
| Example 27 | Y | | | | | 15 | 3.5% | 300 | 1.6 | 1.6 | 7/10 |
| Example 28 | Y | | | | | 15 | 3.5% | 300 | 1.6 | 2 | 10/10 |
| Example 29 | Y | | | | | 15 | 3.5% | 300 | 1.6 | 4 | 10/10 |
| Example 30 | Y | | | | | 12 | 3.0% | 280 | 1.0 | 1 | 7/10 |
| Example 31 | Y | | | | | 12 | 3.0% | 280 | 1.0 | 2 | 10/10 |
| Example 32 | Y | | | | | 10 | 3.5% | 260 | 0.9 | 2 | 10/10 |
| Example 33 | Y | | | | | 10 | 3.5% | 260 | 0.9 | 4 | 10/10 |

The results show that compared with Comparative Example 7, Examples 27 to 33 in which the coating and the positive electrode current collector are in a relation satisfying h ≥ (H × p × x)/k have more excellent nail penetration pass rates. This is because higher thickness and elongation rate of the current collector correspond to larger deformation in the event of being penetrated, and thus a thicker insulation coating is required to satisfy the requirement of extension blocking. Therefore, an appropriate insulation layer thickness is selected according to the foregoing relation, such that a safety-improving effect can be satisfied.

Table 4 shows the influence of the coating slurry of Example 5 being provided on the side portion and the tab of the positive electrode on the nail penetration pass rate.

**Table 4**

| | Position coated with insulation layer | Nail penetration position | Nail penetration pass rate |
|---|---|---|---|
| Comparative Example 8 | Electrode plate side portion uncoated | Electrode assembly side portion | 0/10 |
| Comparative Example 9 | Tab uncoated | Tab | 0/10 |
| Example 34 | Electrode plate side portion coated completely | Electrode assembly side portion | 10/10 |
| Example 35 | Tab coated completely | Tab | 10/10 |

The results show that the coating being provided on the side portion and the tab of the positive electrode can significantly increase the nail penetration pass rate of the nail penetration test on the corresponding part of the electrochemical apparatus and ensure the safety performance of the electrode assembly.

Table 5 shows the influence of the molecular weight of the binder in the coating on the nail penetration pass rate.

**Table 5**

| | Is coating present? | Binder | | | | Insulation material | | Coating adhesion (N/m) | Nail penetration pass rate |
|---|---|---|---|---|---|---|---|---|---|
| | | Type | Percentage | Molecular weight Da | Viscosity (10% of solid content) | Type | Percentage | | |
| Comparative Example 10 | Y | Sodium polyacrylate | 30% | 5000–10000 | <100 mPa.s | $\gamma$-AlOOH | 70% | 0.5 | 0/10 |
| Example 36 | Y | Sodium polyacrylate | 30% | 10000–100000 | <500 | $\gamma$-AlOOH | 70% | 2 | 3/10 |
| Example 37 | Y | Sodium polyacrylate | 30% | 100000–300000 | ~1000 | $\gamma$-AlOOH | 70% | 40 | 10/10 |
| Example 38 | Y | Sodium polyacrylate | 30% | 300000–500000 | >1000 | $\gamma$-AlOOH | 70% | 180 | 10/10 |
| Example 39 | Y | Sodium polyacrylate | 30% | 500000–800000 | >10000 | $\gamma$-AlOOH | 70% | 230 | 10/10 |

The results show that the molecular weight of the binder causes influence on the adhesion of the coating to the current collector. The molecular weight of the binder in the range of the examples of this application can maintain the adhesion of the coating to the current collector, thus ensuring the safety performance of the electrode assembly.

Table 6 shows the influence of a difference between the adhesion of the coating to the current collector and the adhesion of the coating to the binding layer on the nail pass rate.

**Table 6**

| | Adhesion of coating to positive electrode current collector (N/m) | Adhesion of coating to binding layer (N/m) | Nail penetration pass rate |
|---|---|---|---|
| Example 40 | 20 | 40 | 7/10 |
| Example 41 | 20 | 10 | 10/10 |
| Example 42 | 20 | 20 | 10/10 |

The results show that by limiting the adhesion of the coating to the current collector to be greater than or equal to the adhesion of the coating to the binding layer, the nail pass rate of the nail penetration test on the electrochemical apparatus containing the coating can be further increased.

It can be learned from the foregoing examples and comparative examples that in the positive electrode of this application, the coating with high adhesion is applied to a region uncoated with the positive electrode active material layer on the surface of the positive electrode current collector, so the nail penetration test pass rate of the lithium-ion battery is significantly improved, and the safety performance of the lithium-ion battery is significantly improved.

In this specification, reference to "an embodiment", "some embodiments", "one embodiment", "another example", "an example", "a specific example", or "some examples" means that at least one embodiment or example in this application includes a specified feature, structure, material, or characteristic described in this embodiment or example. Therefore, descriptions in various places throughout this specification, such as "in some embodiments", "in the embodiments", "in an embodiment", "in another example", "in an example", "in a specified example", or "examples" do not necessarily refer to the same embodiment or example in this application. In addition, a specified feature, structure, material, or characteristic herein may be combined in any appropriate manner in one or more embodiments or examples.

Although illustrative embodiments have been demonstrated and described, persons skilled in the art should understand that the foregoing embodiments cannot be construed as limitations on this application and that the embodiments may be changed, replaced, and modified without departing from the spirit, principle, and scope of this application.

**Claims**

1. A positive electrode, comprising a positive electrode current collector, a positive electrode active material layer, and a coating, wherein the positive electrode active material layer and the coating are provided on a surface of the positive electrode current collector, and adhesion between the coating and the positive electrode current collector is greater than or equal to 5 N/m.

2. The positive electrode according to claim 1, wherein the coating is located on at least one of the following positions: (1) an end portion of the positive electrode current collector in a length direction; (2) an edge of the positive electrode current collector in a width direction; or (3) a gap of the positive electrode active material layer in a length direction of the positive electrode current collector.

3. The positive electrode according to claim 1, wherein the coating comprises a binder; and optionally, the coating further comprises an insulation material.

4. The positive electrode according to claim 3, wherein the coating and the insulation material are in a relation satisfying the following condition: $h \geq 1.5 \times T$,
wherein h denotes thickness of the coating, and T denotes average particle size of the insulation material.

5. The positive electrode according to claim 4, wherein the average particle size T of the insulation material is 0.1 $\mu$m to 20 $\mu$m, and the thickness h of the coating is greater than or equal to 0.5 $\mu$m.

6. The positive electrode according to claim 1, wherein the coating and the positive electrode current collector are in a relation satisfying the following condition: $h \geq (H \times p \times x)/k$,

wherein h denotes thickness of the coating, x denotes elongation rate of the positive electrode current collector, p denotes strength of the positive electrode current collector, H denotes thickness of the positive electrode current collector, and k is equal to 100 MPa.

7. The positive electrode according to claim 6, wherein the elongation rate x of the positive electrode current collector is in a range of 1.5% to 3.5%, the strength p of the positive electrode current collector is in a range of 100 MPa to 300 MPa, and the thickness H of the positive electrode current collector is in a range of 5 $\mu$m to 20 $\mu$m.

8. The positive electrode according to claim 3, wherein at least one of the following conditions is satisfied:

   a. the binder comprises at least one of polyvinylidene fluoride, polytetrafluoroethylene, sodium carboxymethyl cellulose, styrene-butadiene rubber, nitrile rubber, polyurethane, fluorinated rubber, polyvinyl alcohol, or sodium polyacrylate;
   b. the insulation material comprises at least one of an inorganic insulation material or an organic insulation material, wherein the inorganic insulation material comprises at least one element of Ba, Ca, Al, Si, Ti, Mg, Fe, or B, and the organic insulation material comprises at least one of a homopolymer or copolymer of the following compositions: ethylene, vinyl chloride, propylene, styrene, butadiene, vinylidene fluoride, tetrafluoroethylene, or hexafluoropropylene; or
   c. based on weight of the coating, mass percentage of the binder is 2% to 100%, and mass percentage of the insulation material is 0% to 98%.

9. The positive electrode according to claim 8, wherein the inorganic insulation material comprises at least one of $BaSO_4$, $CaSiO_3$, $CaSiO_4$, $\gamma$-AlOOH, $Al_2O_3$, $TiO_2$, $SiO_2$, SiC, SiN, MgO, $Fe_2O_3$, or BN.

10. The positive electrode according to claim 2, wherein a surface of the positive electrode current collector facing toward the coating is at least partially provided with the positive electrode active material layer.

11. An electrode assembly, comprising the positive electrode according to any one of claims 1 to 10.

12. The electrode assembly according to claim 11, wherein at least one of the following conditions is satisfied:

   d. the coating is present on an outer surface of the electrode assembly;
   e. the coating is present on an edge of the positive electrode in the width direction of the positive electrode current collector; or
   f. the positive electrode comprises a positive electrode tab, and the coating is present on a surface of the positive electrode tab.

13. An electrochemical apparatus, comprising the electrode assembly according to claim 11 or 12.

14. The electrochemical apparatus according to claim 13, wherein the electrode assembly is located in a housing, a binding layer is present between the coating and the housing, and adhesion between the coating and the positive electrode current collector is greater than or equal to adhesion between the coating and the binding layer.

15. An electronic apparatus, comprising the electrochemical apparatus according to claim 13 or 14.

FIG. 1

FIG. 2

FIG. 3

FIG. 4

101

103

102

FIG. 5

101

103

102

FIG. 6

## INTERNATIONAL SEARCH REPORT

| | International application No. |
|---|---|
| | **PCT/CN2020/130421** |

| | |
|---|---|
| **A.** | **CLASSIFICATION OF SUBJECT MATTER** |
| | H01M 4/13(2010.01)i; H01M 10/0525(2010.01)i |
| | According to International Patent Classification (IPC) or to both national classification and IPC |

| | |
|---|---|
| **B.** | **FIELDS SEARCHED** |
| Minimum documentation searched (classification system followed by classification symbols) | |
| | H01M 4/-,H01M 10/- |
| Documentation searched other than minimum documentation to the extent that such documents are included in the fields searched | |
| | |
| Electronic data base consulted during the international search (name of data base and, where practicable, search terms used) | |
| | CNABS, CNTXT, CNKI, DWPI, SIPOABS: 集流体, 涂层, 涂覆, 刺穿, 穿钉, 针刺, 钉刺, 毛刺, 粘结, collect+, coat+, punctur+, needle?, pin?, bond+ |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | CN 104466097 A (DONGGUAN AMPEREX TECHNOLOGY LIMITED et al.) 25 March 2015 (2015-03-25) description, paragraphs 6-34 | 1-5, 8-15 |
| A | CN 104466097 A (DONGGUAN AMPEREX TECHNOLOGY LIMITED et al.) 25 March 2015 (2015-03-25) description, paragraphs 6-34 | 6, 7 |
| Y | CN 101894937 A (DONGGUAN AMPEREX TECHNOLOGY LIMITED et al.) 24 November 2010 (2010-11-24) description paragraphs 10-21, 28-36, figure 1 | 1-4, 8-15 |
| A | CN 101894937 A (DONGGUAN AMPEREX TECHNOLOGY LIMITED et al.) 24 November 2010 (2010-11-24) description paragraphs 10-21, 28-36, figure 1 | 6, 7 |
| Y | CN 109728244 A (NINGDE AMPEREX TECHNOLOGY LTD.) 07 May 2019 (2019-05-07) description, paragraphs 7-28 | 1-5, 8-15 |
| A | CN 109728244 A (NINGDE AMPEREX TECHNOLOGY LTD.) 07 May 2019 (2019-05-07) description, paragraphs 7-28 | 6, 7 |

☐ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **18 June 2021** | **17 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/130421**

| Patent document cited in search report | | | Publication date (day/month/year) | Patent family member(s) | | | Publication date (day/month/year) |
|---|---|---|---|---|---|---|---|
| CN | 104466097 | A | 25 March 2015 | CN | 104466097 | B | 10 October 2017 |
| CN | 101894937 | A | 24 November 2010 | None | | | |
| CN | 109728244 | A | 07 May 2019 | CN | 109728244 | B | 18 August 2020 |

Form PCT/ISA/210 (patent family annex) (January 2015)